Europäisches Patentamt

European Patent Office

Office européen des brevets

(11) Publication number: **0 366 430**
A1

## EUROPEAN PATENT APPLICATION

(21) Application number: 89310976.9

(51) Int. Cl.⁵: **B25J 9/04** , **B25J 9/10**

(22) Date of filing: 24.10.89

(30) Priority: 24.10.88 JP 138384/88

(43) Date of publication of application:
02.05.90 Bulletin 90/18

(84) Designated Contracting States:
DE FR GB

(71) Applicant: TOKYU SHARYO SEIZO KABUSHIKI
KAISHA
1, Kamariya-Cho Kanazawa-Ku
Yokohama-shi Kanagawa-Ken(JP)

(72) Inventor: Yoda, Akira c/o Tokyu Sharyo Seizo
K.K.
1, Kamariya-cho Kanawaza-ku Yokohama-shi
Kanayawa-ken Tokyo(JP)

(74) Representative: Davies, Christopher Robert et
al
Frank B. Dehn & Co. Imperial House 15-19
Kingsway
London WC2B 6UZ(GB)

(54) Multi-articulation robot.

(57) A multi-articulation robot formed of a plurality of rotary articulation mechanisms (20,21,22,23,24), pivoting articulation mechanisms (40,41,42), rotary shafts (10,11,12) and vertical rods (30,31,32,33,34) so that the above mentioned rotary articulation mechanisms, pivoting articulation mechanisms and rotary shafts may be sequentially controlled to move to any predetermined position a working attachment (4) provided at the end of one of said shafts or rods.

FIG. 1

EP 0 366 430 A1

## MULTI-ARTICULATION ROBOT

This invention relates to a multi-articulation robot which can, for example, enter and repair an existing structure or building at a high level.

It is difficult to perform work within an existing structure in which there exists a wide and complicated space in which pillars, girders and beams are interposed from the underground up to a high level. A robot which is large and heavy in the respective rod structure parts, but few in the number of such rods, has been conventionally provided to be used for the work within such wide space.

The above mentioned conventional robot has narrow vertical and horizontal operating ranges so as to have had to be delicately moved as a whole within the space of an existing structure or building. Also, in the conventional working robot to be used in a wide space, the rods forming the respective structural parts have been large and heavy. As it has been necessary to simultaneously drive the respective heavy rods, a plurality of large servomotors or the like have been required, a large controlling electric power source has been used and therefore the price of the robot itself has been very high.

Further, in operation not only has the operator been required to be experienced, but also the electric power required for the operation has simultaneously driven the structure heavier than is required and therefore the operating cost has been higher.

According to the present invention there is provided a multi-articulation robot apparatus comprising a first rotary articulation mechanism rotating a rotary stand; a first pivoting articulation mechanism inclining a first rod pivoted at one end on said rotary stand; a second pivoting articulation mechanism inclining a second rod pivoted to the end of said first rod; a second rotary articulation mechanism rotating a third rod rotatably fitted to the end of said second rod; a third rotary articulation mechanism provided at the end of said third rod and rotating a first rotary shaft about an axis intersecting at right angles with the rotation axis of said third rod; a fourth rotary articulation mechanism provided at the end of said first rotary shaft and having a rotation axis intersecting at right angles with the rotation axis of said first rotary shaft and rotating a second rotary shaft carrying a fourth rod at one end; a third pivoting articulation mechanism inclining a fifth rod pivoted at the end of said fourth rod; and a fifth rotary articulation mechanism rotating at the end of said fifth rod a third rotary shaft rotating about an axis parallel with the pivot axis of said fifth rod.

By means of this arrangement there is provided a multi-articulation robot wherein the vertical and horizontal operating ranges are wide, the operation can be simplified, the respective parts are separately driven so that the controlling electric power source may be made small and the expensive large servomotor is made small so as to reduce cost.

Two embodiments of the present invention will now be described by way of example and with reference to the accompanying drawings, in which:-

Figure 1 is a general perspective view of one embodiment; and

Figure 2 is a general perspective view of another embodiment.

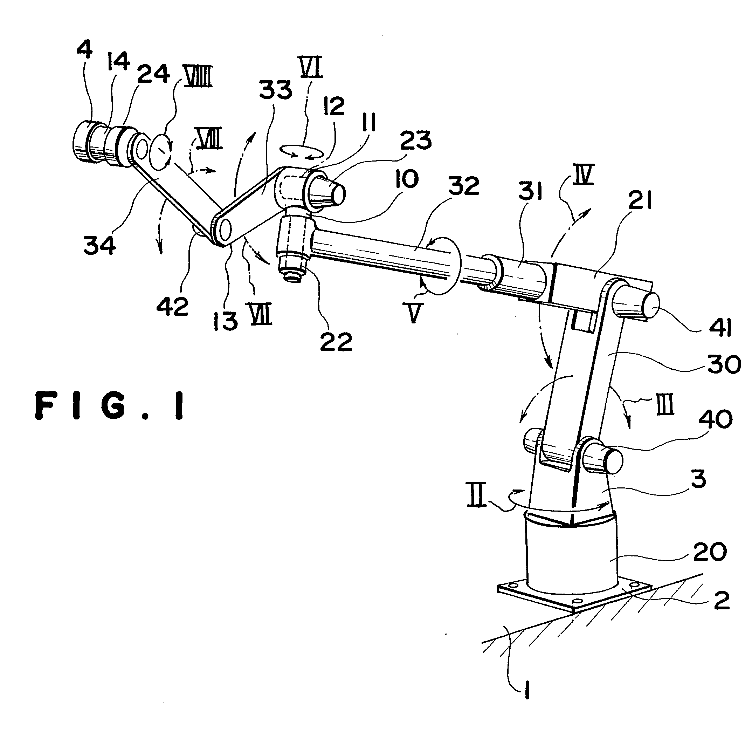

In Figure 1, a pedestal 2 of a multi-articulation robot is a base fixed on a floor 1 in an existing structure or building. A rotary stand 3 is formed to be rotated in the direction indicated by the arrow II by a first rotary articulation mechanism 20 provided on the pedestal 2. A first generally vertical rod 30 is pivoted at one end to the upper end of the rotary stand 3 and is inclinable in the direction indicated by arrows III by a first pivoting articulation mechanism 40. A second pivoting articulation mechanism 41 provided at the tip of the first rod 30 is to incline a second rod 31 in the direction indicated by arrows IV through a second rotary articulation mechanism 21. A third rod 32, first rotary shaft 10 and working attachment 4 are operated to move vertically and horizontally by the operative connection with the rotating and inclining operations of the rotary pedestal 3 and first vertical rod 30. The third rod 32 extends from the end of second rod 31 and is rotatable in the direction indicated by arrows V by the second rotary articulation mechanism 21. The third rod 32 is provided at its end with a third rotary articulation mechanism 22 to make the first rotary shaft 10 rotatable in the direction indicated by arrows VI. In addition, in the end 11 of the first rotary shaft 10 there is provided a third rotary articulation mechanism 23 whereby via a second rotary shaft 12 a fourth rod 33 is rotatable in the direction indicated by arrows VII so that the fourth rod 33 is rotatable in all directions, including the vertical and horizontal planes, near the end of the third rod 32. The fourth rod 33 is provided at its end 13 with a fifth rod 34 rotated in the direction indicated by arrows VIII by a third pivoting articulation mechanism 42 so as to be pivoted with respect to the fourth rod 33 so that a pillar, girder, beam or the like may be approached on the rear surface from the front surface, and a predetermined job may be carried out with the working attachment 4 provided at the end of a fifth vertical rod 34 through a fifth rotary articulation mechanism 24. In the drawing, the reference numeral 14 represents a third rotary shaft making the working attachment 4 rotatable in the direction indicated by arrows VIII.

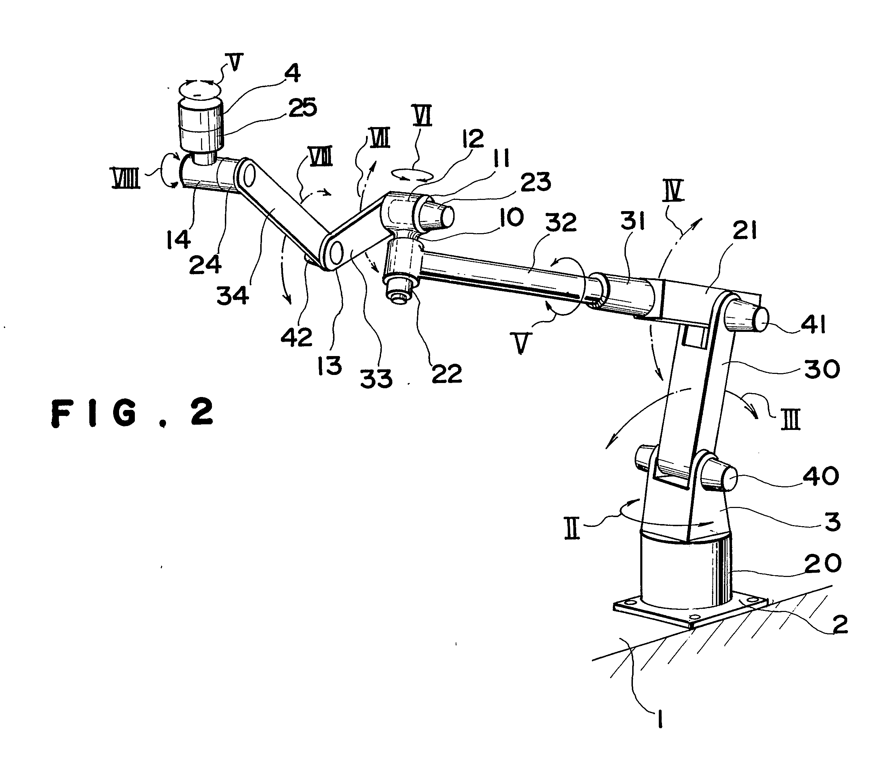

Figure 2 shows another embodiment of a multi-articulation robot of the present invention.

In Figure 2, the same reference numerals as in Figure 1 represent the same members.

In this embodiment, the third rotary shaft 14 is provided intersected at right angles with a sixth rotary articulation mechanism 25 made rotatable in the direction indicated by the arrow V and fitted with the working attachment 4 to carry out a predetermined job.

As mentioned above, the attachment 4 for such work as welding or grinding is fitted to the third rotary shaft 14 in Figure 1 or to the sixth rotary articulation mechanism 25 provided intersected at right angles with the third rotary shaft 14 to carry out a predetermined job.

The first rotary articulation mechanism 20, first pivoting articulation mechanism 40, second rotary articulation mechanism 21 moved and set vertically and horizontally by the second pivoting articulation mechanism 41, second rod 31, third rod 32, third rotary articulation mechanism 22 and fourth rotary articulation mechanism 23 are formed to be of any cubic angle, and the working attachment 4 is rotated and controlled at the end of the fifth rod 34 rotated through the fourth rod 33 fixed to the second rotary shaft 12 and third pivoting articulation mechanism 42.

As will thus be seen, there is provided an apparatus formed of a plurality of the rotary articulation mechanisms, pivoting articulation mechanisms, rotary shafts and rods so that the working attachment 4 may be freely moved to any predetermined position as desired by the vertical movement, horizontal movement, rotation and pivoting operation.

That is to say, even within a wide and complicated space in which pillars, girders and beams are interposed, the rotary articulation mechanisms, pivoting articulation mechanisms and rotary shafts are not simultaneously operated but are sequentially operated to be able to move the robot to any necessary position.

## Claims

1. A multi-articulation robot apparatus comprising a first rotary articulation mechanism rotating a rotary stand; a first pivoting articulation mechanism inclining a first rod pivoted at one end on said rotary stand; a second pivoting articulation mechanism inclining a second rod pivoted to the end of said first rod; a second rotary articulation mechanism rotating a third rod rotatably fitted to the end of said second rod; a third rotary articulation mechanism provided at the end of said third rod and rotating a first rotary shaft about an axis intersecting at right angles with the rotation axis of said third rod; a fourth rotary articulation mechanism provided at the end of said first rotary shaft and having a rotation axis intersecting at right angles with the rotation axis of said first rotary shaft and rotating a second rotary shaft carrying a fourth rod at one end; a third pivoting articulation mechanism including a fifth rod pivoted at the end of said fourth rod; and a fifth rotary articulation mechanism rotating at the end of said fifth rod a third rotary shaft about an axis parallel with the pivot axis of said fifth rod.

2. Apparatus according to claim 1 wherein a working tool is fitted to said third rotary shaft for rotation therewith.

3. Apparatus according to claim 1 wherein said third rotary shaft is provided with a sixth rotary articulation mechanism having an axis of rotation intersecting at right angles the axis or rotation of said third rotary shaft, said sixth rotary articulation mechanism acting to rotate a working tool.

4. Apparatus according to claim 1,2 or 3 wherein said articulation mechanisms are separately driven whereby said rods and shafts may be sequentially operated.

FIG. 1

EP 0 366 430 A1

FIG. 2

# European Patent Office

## EUROPEAN SEARCH REPORT

Application Number

EP 89 31 0976

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | US-A-3268092 (HAINER) <br> * column 3, line 23 - column 4, line 50 * | 1, 2, 4 | B25J9/04 <br> B25J9/10 |
| Y | US-A-4505049 (KUNO) <br> * column 2, lines 39 - 67 * | 1, 2, 4 | |
| A | CH-A-642296 (RUTI-TE STARKE B.V.) <br> * the whole document * | 1 | |
| A | US-A-3262593 (HAINER) | | |
| A | EP-A-0185233 (MESSER GRIESHEIM GMBH) | | |
| A | ELEKTROTECHNISCHE ZEITSCHRIFT - ETZ. <br> vol. 108, no. 6/7, 1987, BERLIN DE <br> page 267 <br> "Riesenmanipulator fur Fusions-Testreaktor" <br> * figure 1 * | 1 | |

| | |
|---|---|
| | TECHNICAL FIELDS SEARCHED (Int. Cl.5) |
| | B25J |

The present search report has been drawn up for all claims

| Place of search | Date of completion of the search | Examiner |
|---|---|---|
| THE HAGUE | 25 JANUARY 1990 | LAMMINEUR P.C.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document